# EUROPÄISCHE PATENTANMELDUNG

(11) **EP 1 222 986 A2**
(43) Veröffentlichungstag der Anmeldung: **17.07.2002**
(21) Anmeldenummer: 02000518.7
(22) Anmeldetag: 09.01.2002
(51) Int. Cl.: B23B 39/02

(54) **Bohr-Fräsmaschine zum Bearbeiten von Rahmenprofilen von Türkonstruktionen**

(30) Priorität: 11.01.2001 DE 20100465 U
(71) Anmelder: Rath, Johann, 74906 Bad Rappenau (DE); Rath-Jung, Jutta, 74906 Bad Rappenau (DE)
(72) Erfinder: Rath, Johann, 74906 Bad Rappenau (DE)
(74) Vertreter: Müller, Hans, Dipl.-Ing.

(57) **Zusammenfassung**

Eine Bohr-Fräsmaschine für eine bohrende und fräsende Herstellung von in Rahmenprofilen von Türkonstruktionen vorzusehenden Aussparungen von Türschließeinrichtungen, besitzt eine in X-Y-Richtung ausgerichtete Auflagevorrichtung (46), die in X-Y-Richtung verfahrbar auf einem Grundgestell (42) gelagert ist und auf der zumindest eines der zu bearbeitenden Rahmenprofile (10), in X-Richtung ausgerichtet, flachliegend lagefixierbar auflagerbar ist. Sie besitzt ferner eine in Z-Richtung auf ein Rahmenprofil (10) einwirksame erste Bohr-Fräsvorrichtung (70) und eine zweite und dritte Bohr-Fräsvorrichtung (80, 90), welche (80, 90) in Y-Richtung auf das Rahmenprofil (10) einwirksam sind, wobei diese beiden Bohr-Fräsvorrichtungen (80, 90) aus zueinander entgegengesetzten Richtungen auf das Rahmenprofil (10) einwirksam sind. Mittels einer Regel- und Steuereinrichtung können die motorischen Antriebe zum Verstellen des Grundgestells (42), der drei Bohr-Fräsvorrichtungen (70, 80, 90) und zum Antreiben der drei Werkzeuge (72, 82, 92) dieser drei Bohr-Fräsvorrichtungen (70, 80, 90) beliebig angesteuert werden

## Beschreibung

### TECHNISCHES GEBIET

Die vorliegende Erfindungbetrifft eine Bohr-Fräsmaschine zur Bearbeitung von Rahmenprofilen von Türkonstruktionen. Die Bohr-Fräsmaschine dient dazu, in solche Rahmenprofile Aussparungen herzustellen, die für die an Türkonstruktionen vorgesehenen Türschließeinrichtungen benötigt werden. Solche Aussparungen werden zum Einsetzen der Schlösser und Verriegelungskonstruktionen sowie zum Befestigen der Griffarmaturen benötigt.

### STAND DER TECHNIK

Bisher werden vorstehend genannten Aussparungen mit Bohrfräsern hergestellt, die längs einer Schablone der gewünschten Aussparung entsprechend längs des betreffenden Rahmenprofils verfahren werden. Diese Arbeitsweise ist relativ zeitaufwendig. So werden zum Herstellen der in einem Türholmen oder Türrahmen benötigten Aussparungen leicht 25 Minuten und mehr benötigt.

### DARSTELLUNG DER ERFINDUNG

Ausgehend von diesem vorbekannten Stand der Technik liegt der Erfindung die Aufgabe zugrunde, eine Bohr-Fräsmaschine der eingangs genannten Art anzugeben, die ein möglichst wirtschaftliches Herstellen besagter Aussparungen in Rahmenprofilen von Türkonstruktionen ermöglicht.

Diese Erfindung ist durch die Merkmale des Anspruchs 1 gegeben. Sinnvolle Weiterbildungen der Erfindung sind Gegenstand von sich an Anspruch 1 anschließenden weiteren Ansprüchen.

Mit der erfindungsgemäßen Bohr-Fräsmaschine ist es damit möglich, einen Türholm oder einen Türrahmen automatisch zu bearbeiten. Das Ansteuern der verschiedenen motorischen Antriebe kann programmgesteuert ablaufen. Dies verkürzt nicht nur die erforderliche Bearbeitungszeit solcher Rahmenprofile um etwa 80 % (Prozent), sondern ermöglicht auch eine gleichbleibend hohe Präzision beim Herstellen der verschiedenen Aussparungen.

Ein derartiges automatisches Arbeiten wäre auch mit sogenannten Bearbeitungszentren möglich. Mit solchen bekannten Bearbeitungszentren lassen sich alle nur denkbaren Bearbeitungsschritte bei einem Rahmenprofil automatisch vornehmen. Diese Universalität eines Bearbeitungszentrums bedingt aber seinen entsprechend hohen Preis und seine demzufolge hohen Arbeitskosten. Die erfindungsgemäße Bohr-Fräsmaschine ist kein Bearbeitungszentrum in diesem vorbekannten Sinne, sondern ist eine automatische, programmierbare Einrichtung für einen ganz bestimmten Anwendungsfall, nämlich zum Herstellen von Aussparungen in Rahmenprofilen von Türkonstruktionen. Die Erfindung nutzt damit die Erkenntnis, dass sich mit automatisch ablaufenden Arbeitsvorgängen Zeit sparen lässt bei gegenüber einer Handbearbeitung qualitativ höherem Arbeitsergebnis. Gegenüber einem bekannten Bearbeitungszentrum betragen die Herstell- und dementsprechende Folgekosten lediglich ein Zehntel, so dass besagte Aussparungen auch sehr wirtschaftlich hergestellt werden können. Mit der erfindungsgemäßen Bohr-Fräsmaschine lässt sich damit auch für kleinere und mittlere Handwerksbetriebe eine qualitativ hochstehende Bearbeitung von Tür-Rahmenprofilen auf betriebswirtschaftlich günstige Weise verwirklichen.

Ausgestaltungen und Vorteile der Erfindung sind den in den Unteransprüchen weiterhin aufgeführten Merkmalen sowie dem nachstehend angegebenen Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine perspektivische Teilansicht eines Rahmenprofils, das von einer erfindungsgemäßen Bohr-Fräsmaschine mit Aussparungen versehen ist,
- Fig. 2: eine schematisierte, die Funktion einer erfindungsgemäßen Bohr-Fräsmaschine verdeutlichende Darstellung,

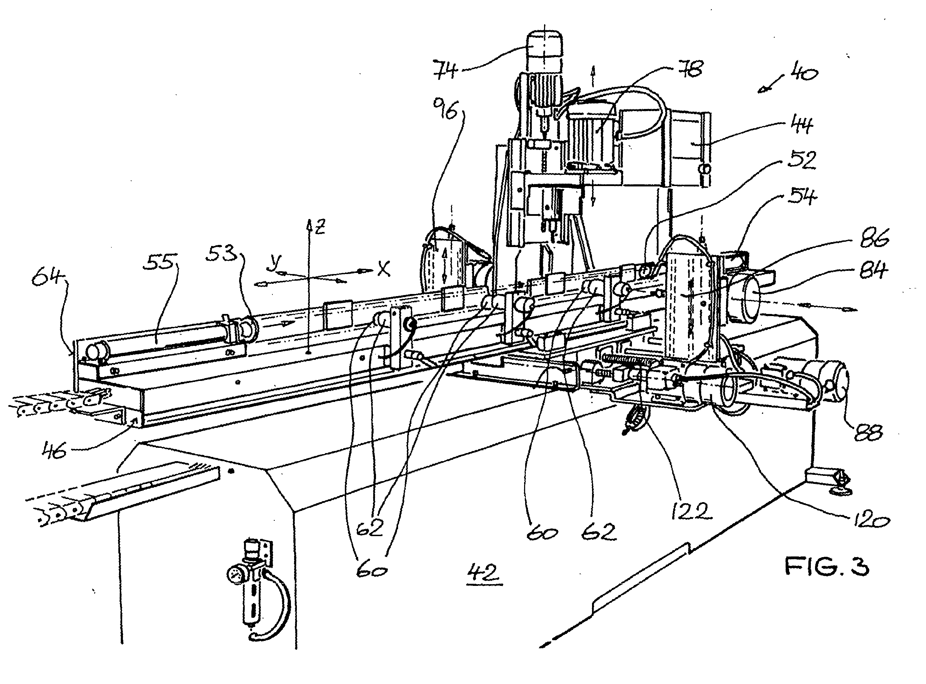

- Fig. 3: eine perspektivische Seitenansicht der Bohr-Fräsmaschine, mit den Bearbeitungsmöglichkeiten gem. Fig. 2 zum Bearbeiten eines Rahmenprofils gemäß Fig. 1.

### WEGE ZUM AUSFÜHREN DER ERFINDUNG

Ein Rahmenprofil 10 besteht im vorliegenden Fall aus Aluminium-Material und besitzt einen in etwa rechteckigen Querschnitt einer linken und rechten Seitenwand 12, 14. Diese beiden Seitenwände 12, 14 liegen sich gegenüber und bilden die Außen- beziehungsweise Innenseite einer ein solches Rahmenprofil 10 aufweisenden Türkonstruktion.

Das Rahmenprofil 10 besitzt im vorliegenden Beispielsfall zwei durch einen Zwischenraum 16 voneinander thermisch getrennte Kammern 18, 20. In der Kammer 20, die er seitlich von der rechten Seitenwand 14 begrenzt wird, sind die Türschließeinrichtungen, die zum Verschließen beziehungsweise Verriegeln der in der Türkonstruktion vorhandenen Tür dienen, vorgesehen.

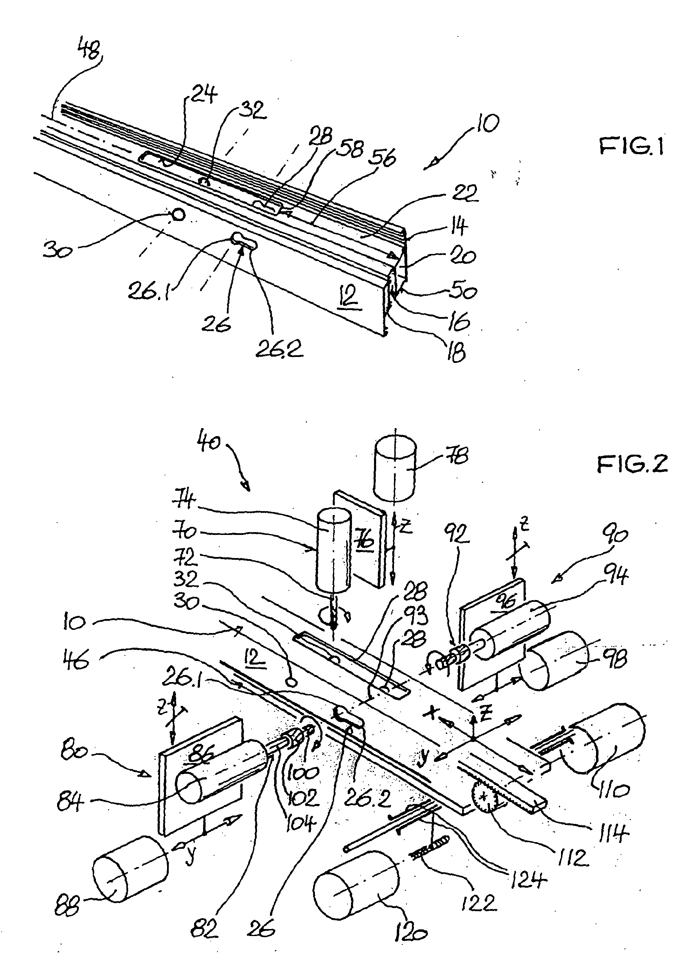

Diese Türschließeinrichtungen benötigen eine auf der in Fig. 1 oberen Seitenfläche 22 vorhandene Aussparung 24. Diese Aussparung 24 weist eine langgestreckte Querschnittsform auf. Eine weitere Aussparung 26 ist in der linken Seitenwand 12 vorhanden. Dieser Aussparung 26 liegt in der rechten Seitenwand 14 eine identische Aussparung 28 gegenüber. Durch diese Aussparungen 26, 28 hindurch kann ein Schließzylinder in eine in der Aussparung 24 einsitzende Schließeinrichtung eingeführt und dort positioniert werden. Eine weitere Aussparung 30 ist oberhalb der Aussparung 26 in der linken Seitenwand 12 vorhanden. Dieser Aussparung 30 liegt in der rechten Seitenwand 14 eine dazu identische Aussparung 32 gegenüber. Diese beiden Aussparungen 30, 32 dienen zum Befestigen von Türklinken oder dergleichen Schließarmaturen.

Während die Aussparungen 30, 32 im vorliegenden Beispielsfall kreisrund sind, besitzen die Aussparungen 26, 28 einen oberen Querschnittsbereich 26.1 mit einer kreisringförmigen Gestalt, an die sich nach unten hin ein langgestreckter, unten ausgerundeter Querschnittsbereich 26.2 anschließt.

Längs der oberen Seitenfläche 22 können noch weitere, der Aussparung 28 weitgehend entsprechende Aussparungen vorhanden sein, um Verriegelungselemente, wie Schwenkhaken und dergleichen Teile, aus der Ebene der oberen Seitenfläche 22 heraus- oder hineinschwenken zu können. Solche Verriegelungsteile greifen dann in Türschließeinrichtungen ein, die einem zum Rahmenprofil 10 benachbarten Holmenprofil, das querschnittsmäßig und materialmäßig weitestgehend dem Rahmenprofil 10 entspricht, vorhanden sind. Auch die Aussparungen in diesem Holmenprofil werden, wie noch nachstehend im Zusammenhang mit dem Rahmenprofil 10 näher beschrieben wird, auf vergleichbare Weise hergestellt.

Die verschiedenen Aussparungen in dem Rahmenprofil 10 werden mit einer Bohr-Fräsmaschine 40 wie folgt hergestellt.

Die Bohr-Fräsmaschine 40 besitzt ein Grundgestell 42. In diesem Grundgestell 42 sind die zum Betrieb der Bohr-Fräsmaschine 40 erforderlichen elektrischen und sonstigen Versorgungsleitungen, wie Pneumatikleitungen, und die erforderliche Elektronik zum Ansteuern und Betreiben der Maschine untergebracht. Über ein Steuerpult 44 lassen sich die verschiedenen Aggregate der Bohr-Fräsmaschine 40, wie noch nachstehend näher beschrieben wird, ansteuern. Das Ansteuern erfolgt im vorliegenden Fall über dem jeweiligen Rahmenprofil und seinen vorgesehenen Aussparungen abgestimmte Betriebsprogramme.

Auf dem Grundgestell 42 ist eine Auflagevorrichtung 46 in X-und Y-Richtung verfahrbar gelagert. Auf dieser Auflagevorrichtung 46 wird das zu bearbeitende Rahmenprofil 10 so aufgelagert, dass es mit seiner Längsachse 48 in X-Richtung auf der Auflagevorrichtung 46 aufliegt. In Fig. 2 ist das Rahmenprofil 10 schematisiert dargestellt. Gegen die fußseitige Stirnfläche 50 des Rahmenprofils 10 (Fig. 1) drückt eine Kolbenstange 52, die in einem Zylinder 54 in Längsrichtung X verstellbar auf der Auflagevorrichtung 46 geführt ist. Der Kolben 52 fährt so weit aus dem Zylinder 54 heraus, dass die fußseitige Stirnfläche 50 einen vorbestimmten Abstand 56 vom unteren Rand 58 der Aussparung 28 besitzt (Fig. 1). Mit dem Abstand 56 können dann alle Aussparungen 28, entsprechend ihrer vorbestimmten Programmierung, auf den unteren Rand 58 bezogen werden.

Im auf der Auflagevorrichtung 46 lagefixierten Zustand drückt auf die kopfseitige Stirnfläche des Rahmenprofils 10 ebenfalls eine Kolbenstange 53, die in einem dem Zylinder 54 vergleichbaren Zylinder 55 auf der Auflagevorrichtung 46 gelagert ist. Stirnseitig kann das Rahmenprofil 10 also bezüglich seiner fußseitigen Stirnfläche 50 mit vorgegebener Längsausrichtung auf der Bohr-Fräsmaschine 40 lagefixiert gehalten werden.

In Querrichtung dazu, in Y-Richtung, wird das Rahmenprofil 10 mittels seitlich auf im vorliegenden Fall gegen die linke Seitenwand 12 einwirkende Puffer 60 gehalten. Diese Puffer 60 sind stirnseitig an entsprechenden Kolbenstangen vorhanden, die in Zylindern 62 entsprechend ausfahrbar gelagert sind. Diese Puffer 60 und ihre Kolbenstangen werden pneumatisch bewegt. Die rechte Seitenwand 14 des Rahmenprofils 10, die den Puffern 60 gegenüberliegt, wird von einer Rückwand 64 gehalten. Das Rahmenprofil 10 wird in Querrichtung Y, also zwischen der Rückwand 64 und den Puffern 60 eingeklemmt gehalten.

An dem Grundgestell 42 ist eine erste Bohr-Fräsvorrichtung 70 vorhanden, deren Werkzeug 72, das im vorliegenden Fall ein Fräser ist, in Z-Richtung ausgerichtet ist. Über einen Elektromotor 74 kann das Werkzeug 72 in Umdrehung versetzt werden. Der Elektromotor 74 mit dem Werkzeug 72 ist auf einem Z-Schlitten 76 gehalten, der über einen Elektromotor 78 in Z-Richtung verfahrbar ist. Bei Aktivierung des Elektromotors 78 kann das Werkzeug 72 also in das Rahmenprofil 10 eintauchen. Durch entsprechendes Verfahren der Auflagevorrichtung 46 kann das auf der Auflagevorrichtung 46 eingeklemmt gehaltene Rahmenprofil 10 dementsprechend so in X-Y-Richtung verfahren werden, dass durch Antrieb des Werkzeuges 72 die in.der.oberen Seitenfläche 22 vorhandenen Aussparungen, wie die Aussparung 28 (Fig. 2), hergestellt werden können. Sobald die Aussparung 28 hergestellt ist, wird der Z-Schlitten 76 nach oben, in Z-Richtung, verfahren, so dass das Werkzeug 72 aus dem Rahmenprofil 10 nach oben heraus wandert. Mit dem Werkzeug 72 können dann verschiedene Aussparungen in der oberen Seitenfläche 22 des Rahmenprofils 10 hergestellt werden.

Die in der linken Seitenwand 12 des Rahmenprofils 10 erforderlichen Aussparungen 26, 30 werden mit einer zweiten Bohr-Fräsvorrichtung 80 hergestellt. Diese Bohr-Fräsvorrichtung 80 besitzt ein Werkzeug 82, das im vorliegenden Fall ein Bohrfräser ist. Das Werkzeug 82 mit seinem ihn antreibenden Elektromotor 84 ist auf einem Y-Schlitten 86 gelagert. Dieser Y-Schlitten 86 kann über einen Elektromotor 88 in Y-Richtung verfahren werden.

Eine dritte Bohr-Fräsvorrichtung 90 ist der zweiten Bohr-Fräsvorrichtung 80, dem Rahmenprofil 10 gegenüberliegend, so positioniert, dass das Werkzeug 92 der dritten Bohr-Fräsvorrichtung 90, das dem Werkzeug 82 entspricht, mit dem Werkzeug 82 auf derselben Y-Achse 93 liegt. Durch die beiden Bohr-Fräsvorrichtungen 80, 90 können also die Aussparungen 26, 30 in der linken Seitenwand 12 und die dazu identischen Aussparungen 28, 32 in der rechten Seitenwand 14 hergestellt werden. Dazu besitzt die dritte Bohr-Fräsvorrichtung 90 ebenfalls einen das Werkzeug 92 antreibenden Elektromotor 94, der dem Elektromotor 84 entspricht und der auf einem Y-Schlitten 96, der dem Y-Schlitten 86 entspricht, befestigt ist. Der Schlitten 96 kann mittels eines Elektromotors 98, der dem Elektromotor 88 entspricht, in Y-Richtung verfahren werden.

Die beiden Werkzeuge 82, 92 besitzen einen ersten, vorderen Abschnitt 100, der als Bohrfräser ausgebildet ist. Anschließend ist ein zweiter Abschnitt 102 vorhanden, der einen gegenüber dem ersten Abschnitt 100 größeren Querschnitt besitzt. Auch dieser zweite Abschnitt 102 ist als Fräser ausgebildet. Daran anschließend ist ein dritter Abschnitt 104 vorhanden, der gegenüber dem zweiten Abschnitt 102 einen kleineren Durchmesser besitzt.

Um die Aussparung 26 in der linken Seitenwand 12 herzustellen, wird folgendermaßen verfahren. Mit Hilfe des ersten und zweiten Abschnittes 100, 102 wird der obere Querschnittsbereich 26.1 hergestellt. Dazu wird die zweite Bohr-Fräsvorrichtung 80 mit Hilfe des Elektromotors 88 gegen und in die linke Seitenwand 12 verfahren. Durch weiteres Eintauchen des Werkzeuges 82 in die linke Seitenwand 12 kann mit Hilfe des dritten Abschnittes 104 anschließend der als Längsschlitz sich darstellende Querschnittsbereich 26.2 hergestellt werden. Dazu wird das Rahmenprofil 10 und damit auch die Auflagevorrichtung 46 entsprechend in X-Richtung verfahren.

In vergleichbarer Weise wird mit Hilfe der dritten Bohr-Fräsvorrichtung 90 die auf der rechten Seitenwand 14 vorhandene Aussparung 28 hergestellt.

Die oberhalb der Aussparungen 26, 28 vorhandenen Aussparungen 30, 32 in den beiden Seitenwänden 12, 14 werden ebenfalls mit der zweiten beziehungsweise dritten Bohr-Fräsvorrichtung 80, 90 hergestellt. Diese kreisförmigen Aussparungen 30, 32 sind so groß, dass sie mit dem zweiten Abschnitt 102 des Werkzeugs 82 beziehungsweise 92 hergestellt werden können.

Das zum Herstellen der vorstehenden Aussparungen erforderliche Verfahren des Rahmenprofils 10 in X-Y-Richtung erfolgt durch entsprechendes Verfahren der Auflagevorrichtung 46 in besagter X-Y-Richtung.

Zum Verfahren in X-Richtung dient ein Elektromotor 110, der ein Ritzel 112 entsprechend antreibt. Das Ritzel 112 kämmt mit einer Zahnstange 114, die in X-Richtung auf der Unterseite der Auflagevorrichtung 46 befestigt ist. Je nach Antrieb des Ritzels 112 wird die Zahnstange 114 und damit die Auflagevorrichtung 46 in X-Richtung oder in der dazu entgegengesetzten X-Richtung verfahren.

Zum Verfahren der Auflagevorrichtung 46 in Querrichtung, der Y-Richtung, dient ein Elektromotor 120. Über eine an dem Motor 120 drehbar angeschlossene Gewindespindel 122 kann die Auflagevorrichtung 46 in Y-Führungen 124 hin und her verstellt werden.

Die beiden Y-Schlitten 86, 96 können in Z-Richtung verstellt werden, um die Aussparungen 26, 30, 28, 32 in Z-Richtung variabel anbringen zu können. Da in einem Herstellbetrieb von Türkonstruktionen regelmäßig im Querschnitt gleiche Rahmenprofile 10 verwendet werden, ist eine Verstellung der beiden Y-Schlitten 86, 96 in Z-Richtung in aller Regel nicht erforderlich. Daher ist diese Verstellung auch im Hinblick auf eine Kostenreduzierung der entsprechenden Bohr-Fräsmaschine im vorliegenden Beispielsfall nur im Handbetrieb vorgesehen. Selbstverständlich wäre es möglich, auch für die Z-Verstellung dieser beiden Y-Schlitten 86, 96 jeweils elektromotorische Antriebe vorzusehen.

Die im vorliegenden Fall drei Puffer 60 und ihre Halterungen sind in X-Richtung verschiebbar gelagert. Dadurch wird verhindert, dass die Puffer 60 in den Bereich von den seitlich einzuarbeitenden Aussparungen 26, 30 kommen können, was den Betrieb der zweiten Bohr-Fräsvorrichtung 80 stören könnte. Die Puffer 60 sind also immer außerhalb der anzubringenden seitlichen Aussparungen 26, 30 angebracht.

## Patentansprüche

1. Bohr-Fräsmaschine für eine bohrende und fräsende Herstellung von in Rahmenprofilen von Türkonstruktionen vorzusehenden Aussparungen von Türschließeinrichtungen,
**gekennzeichnet durch**
- eine in X-Y-Richtung ausgerichtete Auflagevorrichtung (46),
-- die in X-Y-Richtung verfahrbar auf einem Grundgestell (42) gelagert ist und
-- auf der zumindest eines der zu bearbeitenden Rahmenprofile (10), in X-Richtung ausgerichtet, flachliegend lagefixierbar auflagerbar ist,
- eine in Z-Richtung auf ein Rahmenprofil (10) einwirksame erste Bohr-Fräsvorrichtung (70),
- eine zweite und dritte Bohr-Fräsvorrichtung (80, 90), die in Y-Richtung auf das Rahmenprofil (10) einwirksam sind, wobei diese beiden Bohr-Fräsvorrichtungen (80, 90) aus zueinander entgegengesetzten Richtungen auf das Rahmenprofil (10) einwirksam sind,
- eine Regel- und Steuereinrichtung zum vorbestimmbaren, beliebigen Ansteuern der motorischen Antriebe zum Verstellen des Grundgestells (42), der drei Bohr-Fräsvorrichtungen (70, 80, 90) und zum Antreiben der drei Werkzeuge (72, 82, 92) dieser drei Bohr-Fräsvorrichtungen (70, 80, 90).

2. Bohr-Fräsmaschine nach Anspruch 1,
**dadurch gekennzeichnet, dass**
- die zweite und dritte Bohr-Fräsvorrichtung (80, 90) längs derselben Y-Achse (93) ausgerichtet sind.

3. Bohr-Fräsvorrichtung nach einem der vorstehenden Ansprüche,
**dadurch gekennzeichnet, dass**
- die erste Bohr-Fräsvorrichtung (70) einen elektromotorischen Antrieb (78) zum Verstellen des Bohr-Fräswerkzeuges (72) längs der Z-Achse hat.

4. Bohr-Fräsvorrichtung nach einem der vorstehenden Ansprüche,
**dadurch gekennzeichnet, dass**
- die zweite Bohr-Fräsvorrichtung (80) einen elektromotorischen Antrieb (88) zum Verstellen des Bohr-Fräswerkzeuges (82) längs der Y-Achse (93) hat.

5. Bohr-Fräsvorrichtung nach einem der vorstehenden Ansprüche,
**dadurch gekennzeichnet, dass**
- die dritte Bohr-Fräsvorrichtung (90) einen elektromotorischen Antrieb (98) zum Verstellen des Bohr-Fräswerkzeuges (92) längs der Y-Achse (93) hat.

6. Bohr-Fräsvorrichtung nach einem der vorstehenden Ansprüche,
**dadurch gekennzeichnet, dass**
- die zweite Bohr-Fräsvorrichtung (80) in Z-Richtung parallel verstellbar ist.

7. Bohr-Fräsvorrichtung nach einem der vorstehenden Ansprüche,
**dadurch gekennzeichnet, dass**
- die dritte Bohr-Fräsvorrichtung (90) in Z-Richtung parallel verstellbar ist.

8. Bohr-Fräsvorrichtung nach einem der vorstehenden Ansprüche,
**dadurch gekennzeichnet, dass**
- ein motorischer Antrieb (110) zum Verstellen des Grundgestells (42) in X-Richtung und ein zweiter motorischer Antrieb (120) zum Verstellen des Grundgestells (42) in Y-Richtung vorhanden sind.

9. Bohr-Fräsvorrichtung nach Anspruch 8,
**dadurch gekennzeichnet, dass**
- ein Ritzel-Zahnstangen-Antrieb (112, 114) für die Verstellung des Grundgestells (42) in X-Richtung vorhanden ist.

10. Bohr-Fräsvorrichtung nach Anspruch 8,
**dadurch gekennzeichnet, dass**
- ein Spindeltrieb (122) für die Verstellung des Grundgestells (42) in Y-Richtung vorhanden ist.

11. Bohr-Fräsvorrichtung nach einem der vorstehenden Ansprüche,
**dadurch gekennzeichnet, dass**
- eine in X-Richtung verstellbare erste Puffervorrichtung zum Lagefixieren eines auf der Auflagevorrichtung (46) aufliegenden Rahmenprofils (10) vorhanden ist.

12. Bohr-Fräsvorrichtung nach Anspruch 11,
**dadurch gekennzeichnet, dass**
- die erste Puffervorrichtung eine gegen die fußseitige Stirnfläche (50) des Rahmenprofils (10) einwirksame Kolben-Zylinder-Anordnung (52, 54) enthält.

13. Bohr-Fräsvorrichtung nach Anspruch 12,
**dadurch gekennzeichnet, dass**
- die gegen die fußseitige Stirnfläche (50) des Rahmenprofils (10) verfahrbare Kolbenstange auf einen vorwählbaren X-Wert ausfahrbar ist.

14. Bohr-Fräsvorrichtung nach Anspruch 11 oder 12,
**dadurch gekennzeichnet, dass**
- die erste Puffervorrichtung eine gegen die kopfseitige Stirnfläche des Rahmenprofils (10) einwirksame Kolben-Zylinder-Anordnung (53, 55) enthält.

15. Bohr-Fräsvorrichtung nach einem der vorstehenden Ansprüche,
**dadurch gekennzeichnet, dass**
- eine in Y-Richtung verstellbare zweite Puffervorrichtung zum Lagefixieren eines auf der Auflagevorrichtung (46) aufliegenden Rahmenprofils (10) vorhanden ist.

16. Bohr-Fräsvorrichtung nach Anspruch 15,
**dadurch gekennzeichnet, dass**
- die zweite Puffervorrichtung mehrere, parallel zueinander ausgerichtete und mit gegenseitigem Abstand längs des Rahmenprofils (10) angeordnete Kolben-Zylinder-Anordnungen (60, 62) besitzt.

17. Bohr-Fräsvorrichtung nach Anspruch 16,
**dadurch gekennzeichnet, dass**
- die Kolbenstangen der zweiten Puffervorrichtung gemeinsam aktivierbar sind.

18. Bohr-Fräsvorrichtung nach einem der Ansprüche 11 bis 17,
**dadurch gekennzeichnet, dass**
- die Kolbenstangen der Kolben-Zylinder-Anordnungen pneumatisch bewegbar sind.

19. Bohr-Fräsvorrichtung nach einem der vorstehenden Ansprüche,
**dadurch gekennzeichnet, dass**
- die zweite und dritte Bohr-Fräsvorrichtung (80, 90) jeweils einen Stufenfräser als Werkzeug (82, 92) besitzen, mit einem im Durchmesser kleineren (100), sich anschließenden größeren (102) und sich anschließenden wiederum kleineren (104) Fräsabschnitt.
